# EUROPEAN PATENT APPLICATION

(11) **EP 2 677 218 A1**
(43) Date of publication of application: **25.12.2013**
(21) Application number: 12747421.1
(22) Date of filing: 31.01.2012
(51) Int. Cl.: F16K 39/02, F16K 1/00, F16K 11/18, F16K 31/04

(54) **CONTROL VALVE**

(30) Priority: 18.02.2011 JP 2011032864
(71) Applicant: TGK COMPANY, LTD., Tokyo 193-0942 (JP)
(72) Inventor: HIROTA, Hisatoshi, Hachioji-shi, Tokyo 193-0942 (JP)
(74) Representative: Schröer, Gernot H.
(86) International application number: PCT/JP2012/000592
(87) International publication number: WO 2012/111264

(57) **Abstract**

A control valve (100) includes a guiding passage (118), provided in a body (104), which is coaxially formed with a valve hole (120), a driven member structured such that a valve element (130), for opening and closing a valve section by touching and leaving the valve hole (120), and a guide portion (148), slidably supported by the guiding passage (118), are integrally formed with each other, a pressure canceling structure in which the effect of fluid pressure acting on the valve element (130) is canceled, an O-ring (149) provided on the sliding surface of the guide portion (148), a valve actuating member (134), which is driven by a motor unit (102) in a direction of axis line to drive the valve element (130) in opening and closing directions of the valve section, a transmitting rod (152), which is inserted to the driven member and which is operatively linked to the valve actuating member (134) in a manner such that the transmitting rod (152) and the valve actuating member (134) are displaceable in an integrated manner, and a spring (160), which biases the driven member in a valve closing direction and which is supported by the driven member and the transmitting rod (152) such that the spring (160) is set between the driven member and the transmitting rod (152).

## Description

### [Technical Field]

The present invention relates to a control valve for controlling the flow of working fluid and it particularly relates to a control valve provided with an actuator that electrically adjusts the valve opening degree.

### [Background Art]

An automotive air conditioner is generally configured by including a compressor, a condenser, an evaporator, and so forth arranged in a refrigerant circulation passage. Various types of control valves are provided (see Patent Document 1, for instance). Here, these various types of control valves are used to switch the refrigerant circulation passages and regulate the flow rate of refrigerant according to an operation state in such a refrigeration cycle, for instance. A mechanical valve and an electrically driven valve are used, as appropriate, as the control valves used herein. Note here that the mechanical valve opens and closes a valve section through a balance between the force exerted by a pressure received from the refrigerant and the biasing force of a spring opposing the force exerted thereby. Note also that the electrically driven valve is provided with an actuator for electrically regulating the opening degree of the valve section from an external means.

### [Related-Art Document]

### [Patent Document]

(1) Japanese Unexamined Patent Application Publication (Kokai) No. Hei11-287354.

### [Disclosure of Invention]

### [Problems to be Solved by the Invention]

Where the electrically driven valve is provided in such an air conditioner, a motor, a solenoid or the like is used as the actuator. It is desirable that the actuator be configured to be of a reduced size for the purpose of saving the space and saving energy, for instance. In this respect, the electrically driven valve, having a large-diameter valve section, which particularly requires a relatively large open/close drive force may be provided with a back pressure canceling structure whereby a fluid pressure acting on a valve element can be canceled out. In order to maintain the back pressure, a structure where a sealing member is provided on a sliding surface of the valve element that divides a back pressure chamber is widely used for such an electrically driven valve.

As the sealing property of a sliding portion increases, a sliding force to drive the valve element gets larger. As a result, a larger drive force enough to prevail against the sliding force is required. Also, a spring, which produces a biasing force required to maintain an open or closed state of the valve element, is usually provided in order to maintain the stability of the valve section while no power is being supplied to the electrically driven valve. Accordingly, a drive force enough to overcome the biasing force of the spring is also required to drive the valve element. Thus, in order that the actuator can be configured in a smaller size, the effects of the sliding force and the biasing force acting on the valve element need to be reduced.

The present invention has been made in view of the foregoing problems, and one of purposes of the present invention is to configure an actuator such that the actuator is of a reduced size by reducing an open/close drive force of an electrically driven valve.

### [Means for Solving the Problem]

In order to resolve the aforementioned problems, a control valve according to one embodiment of the present invention includes: a body having an internal passage through which a working fluid flows, the internal passage having a valve hole; a guiding passage provided in the body, the guiding passage being coaxially formed with the valve hole; a driven member configured such that a valve element for opening and closing a valve section by touching and leaving the valve hole and a guide portion slidably supported by the guiding passage are integrally formed with each other; a pressure canceling structure configured to cancel out an effect of fluid pressure acting on the valve element; a sealing member provided on a sliding surface of the guide portion; an actuator mounted on the body; an actuating member configured to drive the valve element in opening and closing directions of the valve section, the actuating member being driven by the actuator in a direction of axis line; a transmitting member operatively linked to the actuating member in a manner such that the transmitting member and the actuating member are displaceable in an integrated manner, the transmitting member being inserted to the driven member; and a biasing member configured to bias the driven member in a valve closing direction, the biasing member is being supported by the driven member and the transmitting member in such a manner that the biasing member is set between the driven member and the transmitting member.

By employing this embodiment, a relatively large valve section is opened and closed with a small drive force by provision of the pressure canceling structure. Also, provision of the sealing member in the guide portion of the driven member ensures an excellent sealing property of the sliding portion. In such a configuration as described above, the biasing member is set between the driven member and the transmitting member. This can prevent or at least suppress the sliding force of the guide portion and the biasing force of the biasing member from simultaneously opposing the drive force of the actuator. As a result, the drive force required of the actuator can be kept small and the actuator can be of a reduced size.

### [Advantageous Effects]

The present invention enables the drive force required of the electrically driven valve to be kept small and enables the actuator to be constructed with a small size.

### [Brief Description of Drawings]

FIG. 1 is a cross-sectional view illustrating a structure and an operation of a control valve according to a first embodiment of the present invention;
FIG. 2 is a cross-sectional view illustrating a structure and an operation of a control valve according to a first embodiment;
FIG. 3 is a cross-sectional view illustrating a structure and an operation of a control valve according to a first embodiment;
FIG. 4 is a cross-sectional view illustrating a structure and an operation of a control valve according to a second embodiment; and
FIG. 5 is a cross-sectional view illustrating a structure and an operation of a control valve according to a second embodiment.

### [Modes for Carrying Out the Invention]

The present invention will now be described in detail based on preferred embodiments with reference to the accompanying drawings.

### [First Embodiment]

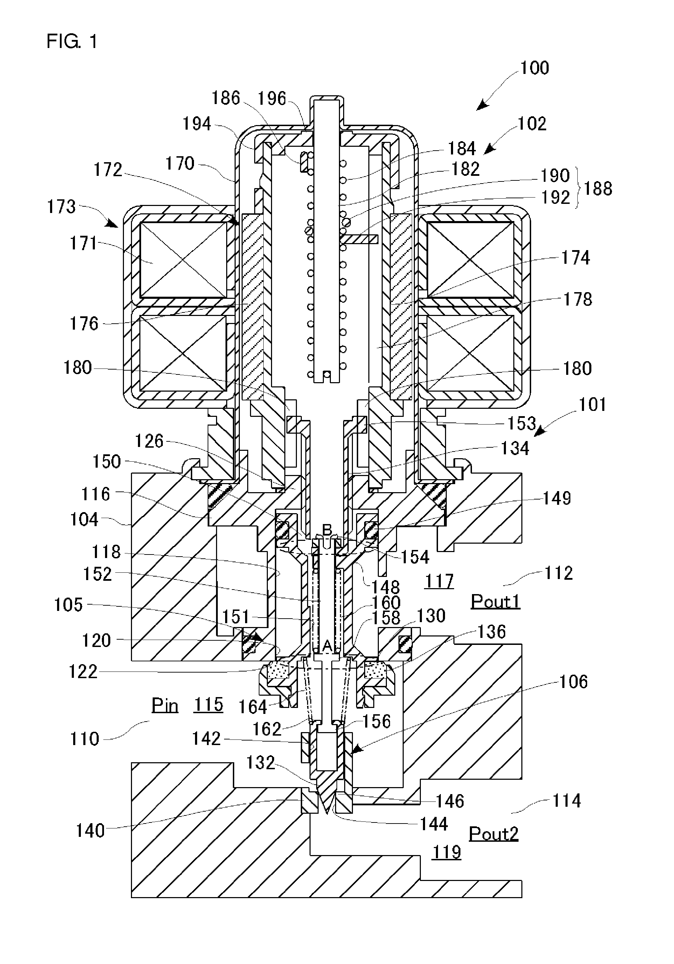

A description is first given of a first embodiment of the present invention. FIG. 1 to FIG. 3 are cross-sectional views each showing a structure and an operation of a control valve according to a first embodiment. A control valve of the present embodiments is primarily designed to be used for a heat pump type air conditioner installed in an electric-powered vehicle, for instance.

That is, an automotive air conditioner is provided with a refrigeration cycle (refrigerant circulation circuit) wherein a compressor, an internal condenser, an external heat exchanger, an evaporator, an accumulator and so forth are connected to each other by piping. And the air conditioner performs air conditioning inside a passenger compartment through a heat exchange carried out in a process where a refrigerant circulates within the refrigeration cycle while the refrigerant changes its state. Various types of control valves for appropriately controlling the cooling and the heating are provided in the refrigeration cycle, and a control valve 100 constitutes one of such various types of control valves.

The control valve 100 is provided at a branch point where an upstream passage is branched out into a first downstream passage and a second downstream passage. And the control valve 100 regulates the flow rate of refrigerant flowing from the upstream passage to the respective downstream passages. The control valve 100 may be configured as a proportional valve that regulates the valve-opening degree at a preset opening level. The control valve 100 is basically controlled to one of four basic states (1) to (4), which are (1) a fully open state, (2) a large-diameter controlled state, (3) a small-diameter controlled state, and (4) a closed state. The large-diameter controlled state is a state where the valve-opening degree or state is rather large but not so large as the fully open state, and a small-diameter controlled state is a state where the valve-opening degree or state is smaller but never equal to the closed state. The control valve 100 also functions as an expansion device through a small-diameter control.

As shown in FIG. 1, the control valve 100 is constituted as a motor-operated valve of stepping motor driven type and is configured by integrally assembling a valve body 101 and a motor unit 102. The valve body 101 is configured such that a first valve 105 of large diameter and a second valve 106 of small diameter are coaxially housed in a bottomed cylindrical body 104.

A lead-in port 110 is provided at one side of the body 104, whereas a first lead-out port 112 and a second lead-out port 114 are provided at the other side thereof along the vertical direction. The lead-in port 110 communicates with the upstream passage. The first lead-out port 112 communicates with the first downstream passage, and the second lead-out port 114 communicates with the second downstream passage. That is, a first internal passage, joining the lead-in port 110 to the first lead-out port 112, and a second internal passage, joining the lead-in port 110 to the second lead-out port 114, are formed in the body 104. The first valve 105 controls the opening degree of the first internal passage, whereas the second valve 106 controls the opening degree of the second internal passage.

A bottomed and stepped cylindrical partition member 116 is disposed in an upper half of the body 104. The partition member 116 separates the interior of the valve body 101 from the interior of the motor unit 102. A bearing part 126 having a circular boss shape is provided in a bottom center of the partition member 116. The bearing part 126 has an internal thread on an inner circumferential surface of the bearing part 126, and an outer circumferential surface thereof functions as a sliding bearing. The partition member 116 is concentrically assembled to the body 104 through the medium of sealing members provided at the respective outer circumferential surfaces of an upper end part and a lower end part of the partition member 116. The inner circumferential surface of the partition member 116 forms a guiding passage 118, and a lower end part thereof forms a vale hole 120. Also, a valve seat 122 is formed by a lower-end opening end edge on the valve hole 120. A communication hole, which communicates the inside and the outside of the partition member 116 is provided in a surface opposite to the first lead-out port 112 in the partition member 116.

A large-diameter valve element 130, a small-diameter valve element 132, and a valve actuating member 134 are disposed coaxially (i.e., extend along the same axis line) inside the body 104. The opening degree of the first valve 105 is regulated such that the valve element 130 moves toward and away from the valve hole 120 from an upstream side, and thereby the flow rate of refrigerant flowing through the first internal passage is regulated. A valve member 136 formed of a ring-shaped elastic body (e.g., rubber) is fitted on an outer circumferential surface of the valve element 130. And the valve member 136 is seated on a valve seat 122, so that the first valve 105 can be completely closed.

Also, a guide member 140 of a small cylindrical shape is disposed in a lower half of the body 104. The guide member 140 is formed coaxially with the valve element 130 in a central part of the second internal passage, and a lower half part of the guide member 140 is press-fitted to the body 104. An inner circumferential surface of an upper half of the guide member 140 forms a guiding passage 142, and a lower end part thereof forms a valve hole 144. Also, a valve seat 146 is formed by an upper-end opening end edge on the valve hole 144. A communication hole, which communicates the inside and the outside of the guide member 140 is provided in a surface opposite to the lead-in port 110. As illustrated in FIG. 1, a common high-pressure chamber 115, which communicates with the lead-in port 110, is formed upstream of the valve hole 120 and the valve hole 144. A low-pressure chamber 117, which communicates with the first lead-out port 112, is formed downstream of the valve hole 120. A low-pressure chamber 119, which communicates with the second lead-out port 114, is formed downstream of the valve hole 144.

The valve element 130 is formed connectedly on a guide portion 148 with a reduced diameter portion formed between the valve element 130 and the guide portion 148. In other words, the valve element 130 and the guide portion 148 together with the reduced diameter portion formed therebetween constitute a "driven member", of a stepped cylindrical shape, which is integrally formed thereby. The guide portion 148 is located in the low-pressure chamber 117. An upper end of the guide portion 148 is slidably supported by the guiding passage 118 through the medium of an O-ring 149, which functions as a "sealing member", and thereby a stable movement of the valve element 130 in an opening or closing direction is ensured. A back pressure chamber 150 is formed between the guide portion 148 and the partition member 116. Also, a communicating path 151, which runs between the valve element 130 and the guide portion 148, is formed and communicates between the high-pressure chamber 115 and back pressure chamber 150. Thereby, the back pressure chamber 150 is constantly filled with the fluid having an upstreamside pressure Pin introduced from the lead-in port 110.

In the present embodiment, an effective diameter A of the valve hole 120 is set equal to an effective diameter B of the guiding passage 118. In other words, the effective area of diaphragm of the valve element 130 is practically equal to that of the guide portion 148. Thus, the effect of the refrigerant pressure acting on the valve element 130 is cancelled. In particular, provision of the O-ring 149 ensures an excellent sealing property of a sliding portion in the guide portion 148 and also prevents foreign particles or the like from being trapped in the sliding portion.

An elongated transmitting rod 152, which functions as a transmitting member", is coaxially inserted inside the valve element 130. And the valve element 132 is disposed at a lower end part of the transmitting rod 152 so that the valve element 132 can be operatively coupled or linked (operation-linked) to the transmitting rod 152. An upper end part of the transmitting rod 152 penetrates a bottom of the valve actuating member 134, and a tip of the transmitting rod 152 is swaged outwardly so as to form a stopper 154. That is, the upper end part of the transmitting rod 152 is supported by the bottom of the valve actuating member 134. The lower end part of the transmitting rod 152 becomes a stopper 156 that protrudes radially outward. A spring support member 158 protruding radially outward is provided in a central part of the transmitting rod 152. A spring 160, which functions as a "biasing member" is set between an inner wall of the guide portion 148 and the spring support member 158. That is, the valve element 130 and the transmitting rod 152 are displaceable relative to each other in a direction of axis line; under normal conditions, the spring 160 biases the stopper 154 in a direction of axils line and therefore a stretched state as shown in FIG. 1 is kept.

The valve element 132, which is of a stepped cylindrical shape, is disposed coaxially below the valve element 130. The valve element 132 is slidably inserted to the guide member 140, and a tip of the valve element 132 is disposed in a position opposite to the valve hole 144. The vale element 132 is constructed as a so-called needle valve element, and the sharply pointed tip of the valve element 132 is inserted to and removed from the valve hole 144. The valve element 132 touches and leaves the valve seat 146 and thereby the second valve 106 can be opened and closed.

A cylindrical holding section is formed in an upper half of the valve element 132. This holding section holds the stopper 156 of the transmitting rod 152 in a direction of axis line in a relatively displaceable manner. An upper end opening of the valve element 132 is a stopper 162 that is slightly swaged inwardly, and the stopper 162 prevents the stopper 156 from falling off. A spring 164, which biases the valve element 132 in a valve closing direction, is set between the valve element 130 and the valve element 132. The spring 164 functions a "second biasing member". More specifically, the valve element 132 and the transmitting road 152 are relatively displaceable in a direction of axis line by as much as the length of their holding section; under normal conditions, the valve element 132 and the transmitting road 152 are biased in a direction where the stopper 162 and the stopper 156 are engaged with each other and therefore a stretched state as shown in FIG. 1 is kept. In the present embodiment, the spring load of the spring 164 is set so that the spring load of the spring 164 is significantly smaller than that of the spring 160. For example, the spring load of the spring 160 as depicted in FIG. 1 is about 600 gram-weight, whereas the spring load of the spring 164 as depicted in FIG. 1 is about 100 gram-weight. On the other hand, the net force of the spring load of the spring 160 and the spring load of the spring 164 is set so that the net force thereof is larger than a sliding friction in the O-ring 149 of the guide portion 148, namely the sliding force (e.g., 600 gram-weight) of the driven member. In a modification, the spring load of the spring 160 may be set to 700 gram-weight, for instance; that is, the spring load of the spring 160 may be set larger than the sliding force of the driven member.

The valve actuating member 134, which is of a stepped cylindrical shape, has an external thread on an outer circumference of the valve actuating member 134. The outer thread is secured to the internal thread on the bearing part 126. A plurality of legs 153 (four legs 153 in the present embodiment) extending radially outward are provided at an upper end part of the valve actuating member 134, and the legs 153 are fitted to a rotor of the motor unit 102. The valve actuating member 134 is rotated by the rotational driving force of the motor unit 102 and converts its rotative force (torque) into a translational force. That is, rotating the valve actuating member 134 displaces the valve actuating member 134 in the direction of axis line through a screw mechanism that functions as a "functioning conversion mechanism". As a result, the valve element 130 or the valve element 132 is driven in an opening or closing direction. When the first valve 105 is open, the valve element 130 and the valve actuating member 134 operate integrally with each other. When the second valve 106 is open, the valve element 132 and the valve actuating member 134 operate integrally with each other.

Also, the motor unit 102 is configured as a stepping motor that includes a rotor 172 and a stator 173. The motor unit 102 is configured such that the motor unit 102 supports the rotor 172 in a freely rotatable manner inside a bottomed cylindrical sleeve 170. The stator 173 that houses a magnetizing coil 171 therein is provided on the outer periphery of the sleeve 170. A lower end of the sleeve 170 is assembled to the body 104. And the sleeve 170 and the body 104 constitute a body of the control valve 100.

The rotor 172 is comprised of a rotational shaft 174 formed in a cylindrical shape and a magnet 176 disposed on the periphery of the rotational shaft 174. In the present embodiment, the magnet 176 is magnetized to 24 poles. An internal space extending across almost entire length of the motor unit 102 is formed inside the rotational shaft 174. A guide portion 178 extending in parallel with the direction of axis line is provided at a specific position of inner circumferential surface of the rotational shaft 174. The guide portion 178 is used for the purpose of forming a raised part used to be engage with a rotational stopper (described later), and the guide portion 178 is constituted by a single protrusion extending in parallel with the direction of axis line.

The diameter of a lower end of the rotational shaft 174 is slightly reduced, and four guide portions 180 extending in parallel with the direction of axis line are provided on the inner circumferential surface thereof. Each guide portion 180 is formed of a pair of protrusions extending in parallel with the direction of axis line, and the guide portions 180 are provided at every 90 degrees on the inner circumferential surface of the rotational shaft 174. The aforementioned four legs 153 of the valve actuating member 134 are fitted to the four guide portions 180, so that the rotor 172 and the valve actuating member 134 can rotate together, namely, they can rotate as a single unit. It is to be noted here, however, that a relative displacement of the valve actuating member 134 in the rotation direction in relation to the rotor 172 is restricted but the displacement thereof in the direction of axis line along the guide portions 180 is permitted. In other words, while the valve actuating member 134 rotates together with the rotor 172, the valve actuating member 134 is driven in an opening or closing direction of the valve element 132.

An elongated shaft 182 is provided, inside the rotor 172, along the axis line of the rotor 172. An upper end of the shaft 182 is press-fitted to a bottom center of the sleeve 170 and the shaft 182 is cantilevered thereby. Also, the shaft 182 extends into an internal space in parallel with the guide portion 178. The shaft 182 is disposed along the same axis line as that of the valve actuating member 134. A guide portion 184 in the shape of a spiral extending across almost entire length of the shaft 182 is formed on the shaft 182. The guide portion 184, which is formed of a coil-shaped material, is fitted on an exterior surface of the shaft 182. An upper end of the guide portion 184 is folded so as to form a stopper 186.

A rotational stopper 188 in the shape of a spiral is rotatably engaged with the guide portion 184. The rotational stopper 188 has a spiral engagement portion 190, which joins with the guide portion 184, and a power-transmitting portion 192, which is supported by the rotational shaft 174. The engagement portion 190 has a shape of a single-turn coil, and the power-transmitting portion 192 extending radially outward is formed connectedly on a lower end of the engagement portion 190. A tip of the power-transmitting portion 192 is joined together with the guide portion 178. That is, the power-transmitting portion 192 abuts against a protrusion of the guide portion 178 so as to be stopped by the protrusion thereof. Thus, a relative displacement of the rotational stopper 188 in the rotation direction is restricted by the rotational shaft 174; the rotational stopper 188 slides along the guide portion 178 and the displacement thereof in the direction of axis line is permitted.

In other words, the rotational stopper 188 integrally rotates with the rotor 172, and the engagement portion 190 of the rotational stopper 188 is guided along the guide portion 184, so that the rotational stopper 188 is driven along the direction of axis line. It is to be noted here that the range within which the rotational stopper 188 is allowed to be driven in the direction of axis line is restricted by the stoppers formed at both ends of the guide portion 178. FIG. 1 illustrates a state where the rotational stopper 188 is in an intermediate position. As the rotational stopper 188 is displaced upward and is stopped by the stopper 186, the position at which the rotational stopper 188 stops is a top dead point. As the rotational stopper 188 is displaced downward, the rotational stopper 188 is stopped at a bottom dead point.

An upper end of the rotor 172 is freely rotatably supported by the shaft 182 and a lower end thereof is freely rotatably supported by the bearing part 126. More specifically, a bottomed cylindrical end member 194 is so provided as to close and seal off an upper end opening of the rotational axis 174, and a part of a cylindrical shaft 196 provided in a central position of the end member 194 is supported by the shaft 182. That is, the bearing part 126 serves as a bearing part at one end side, whereas a sliding portion of the shaft 182 relative to the cylindrical shaft 196 serves as a bearing part at the other end side.

The control valve 100 configured as described above functions as a control valve of stepping motor driven type capable of regulating the valve opening degree by controlling the drive of the motor unit 102. Now, an operation of such the control vale 100 will be described in detail. When the flow rate of refrigerant is controlled by the control valve 100, a not-shown control unit in an automotive air conditioner computes the number of steps for driving a stepping motor and then supplies the drive current (drive pulse) to the magnetizing coil 171. Thereby, the rotor 182 rotates and the valve actuating member 134 is rotated and driven. As a result, the first valve 105 of large diameter and the second valve 106 of small diameter are regulated at preset opening levels, respectively. At the same time, the rotational stopper 188 is driven along the guide portion 184, thereby controlling the operating range of each valve element.

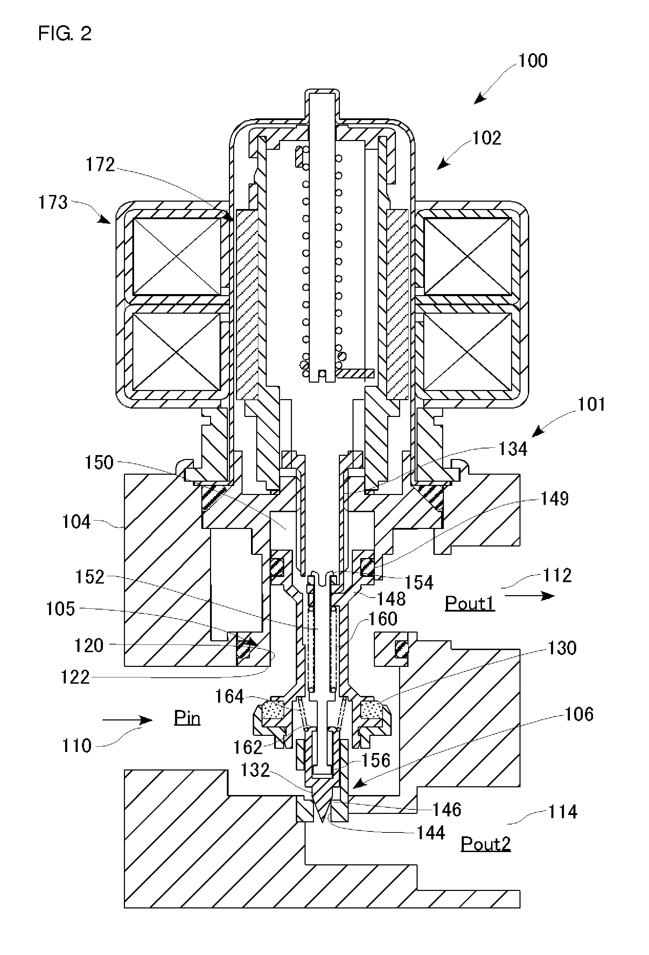

More specifically, when a large-diameter control is performed, the state as shown in FIG. 1 transits to the state as shown in FIG. 2. That is, as the rotor 172 is rotated and driven in one direction (in the normal direction), the valve actuating member 134, which rotates together with the rotor 172, moves to lower position by a screw mechanism. At this time, while the valve actuating member 134 is in contact with the guide portion 148, the valve element 130 is displaced in a valve opening direction in a manner such that the guide portion 148 is pressed down. The valve element 130 is driven within a range between the completely closed state as shown in FIG. 1 and the fully open state as shown in FIG. 2, thereby adjusting the valve opening degree of the first valve 105. At this time, a drive force enough to overcome the net force of the sliding force (sliding friction) of the O-ring 149 and the biasing force (reaction force) of the spring 164 enables the motor unit 102 to run.

That is, an operation linkage between the transmitting rod 152 and the valve element 132 is canceled and therefore the transmitting rod 152 and the valve element 130 are displaceable in an integrated manner. Hence, the biasing force of the spring 160 does not act as the reaction force. Thus it suffices that the motor unit 102 generates a drive force enough to overcome the net force of the biasing force (e.g., up to 200 gram-weight) of the spring 164 whose spring load is small and the sliding force (e.g., 600 grams) of the O-ring 149. Since an engaging state in which the stopper 162 of the valve element 132 and the stopper 156 of the transmitting rod 152 are in contact with each other is released as shown in FIG. 2, an excessive pressing force will not act upon between the valve element 132 and the valve seat 146.

Conversely, in order to restore the state of the first valve 105 from the open state as shown in FIG. 2 to the closed state as shown in FIG. 1, the rotor 172 in the state as shown in FIG. 2 is rotated and driven in the other direction (in the reverse direction). In that case, the net force of the biasing force of the spring 160 and the biasing force of the spring 164 is larger than the sliding force of the O-ring 149. Thus, the valve element 130, which keeps the operation linkage to the valve actuating member 134, is pushed up, integrally with the valve actuating member 134, in a valve closing direction. At this time, the biasing force of the spring 164 acts in the same direction as that of the drive force of the motor unit 102. That is, it suffices that the drive force of the motor unit 102 is a force at least overcoming a difference (e.g., 400 to 500 gram-weight) between the sliding force (e.g., 600 gram-weight) of the O-ring 149 and the biasing force (e.g., 100 to 200 gram-weight) of the spring 164.

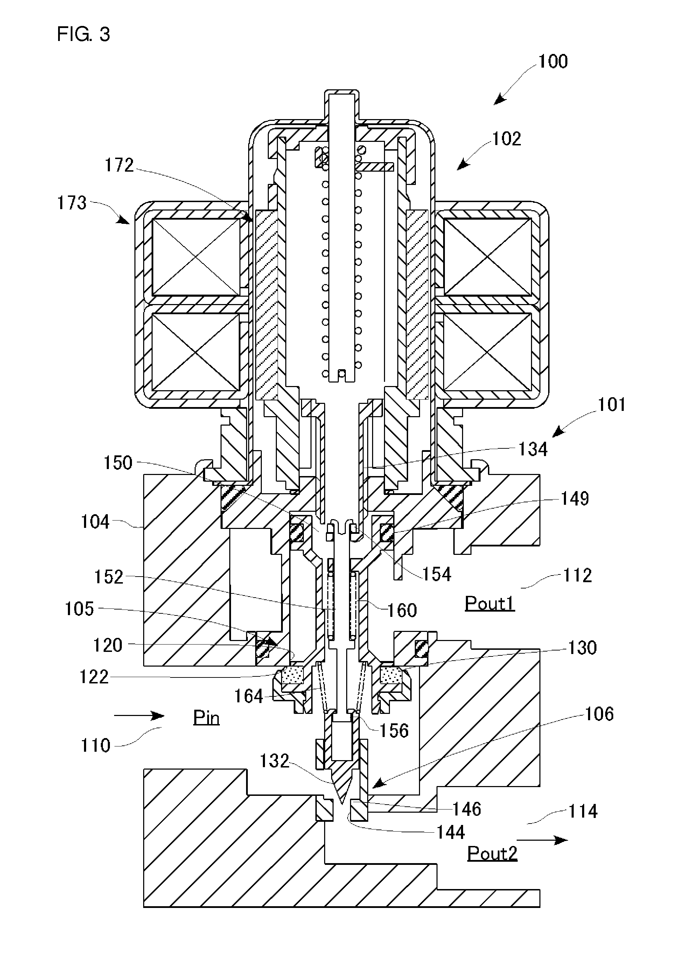

When a small-diameter control is performed, the state as shown in FIG. 1 transits to the state as shown in FIG. 3. As the rotor 172 is rotated and driven in the other direction (in the reverse direction), the valve element 132 is displaced in a valve opening direction and then the second valve 106 is in an open state as shown in FIG. 3. That is, the valve actuating member 134, which rotates together with the rotor 172, moves to upper position by the screw mechanism. As a result, the transmitting rod 152 and the valve element 132 are displaced in a valve opening direction in such a manner that the stopper 154 is pulled up. The valve element 132 is driven within a range between the completely closed state as shown in FIG. 1 and the fully open state as shown in FIG. 3, thereby adjusting the valve opening degree of the second valve 106. At this time, it suffices that the drive force of the motor unit 102 is a force at least overcoming the net force of the biasing force (reaction force) of the spring 160 and the biasing force (reaction force) of the spring 164.

That is, an operation linkage between the transmitting rod 152 and the valve element 130 is canceled and therefore the transmitting rod 152 and the valve element 132 are displaceable in an integrated manner. Hence, the sliding force of the O-ring 149 does not act as the reaction force. Thus it suffices that the motor unit 102 generates a drive force enough to overcome the net force of the biasing force (e.g., up to 700 gram-weight) of the spring 160 and the biasing force (e.g., up to 150 gram-weight) of the spring 164. Since an engaging state in which the transmitting rod 152 and the valve element 130 are in contact with each other is released as shown in FIG. 3, an excessive pressing force will not act upon between the valve element 130 and the valve seat 122.

Conversely, in order to restore the state of the second valve 106 from the open state as shown in FIG. 3 to the closed state as shown in FIG. 1, the rotor 172 in the state as shown in FIG. 3 is rotated and driven in one direction (in the normal direction). In that case, the net force of the biasing force of the spring 160 and the biasing force of the spring 164 acts in a valve closing direction. Thus no reaction force relative to the drive force of the motor unit 102 is created.

### [Second Embodiment]

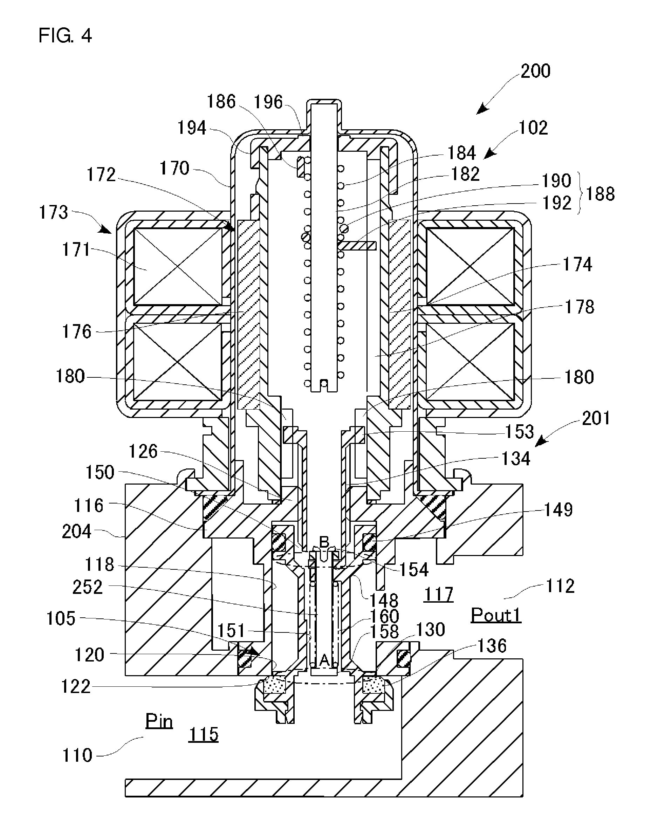

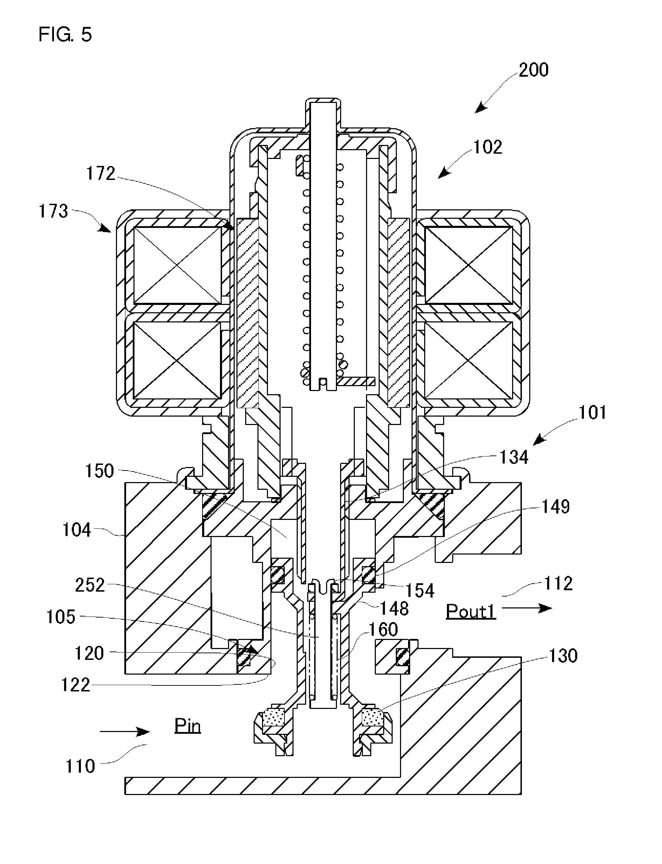

A description is now given of a second embodiment of the present invention. A control valve according to the second embodiment is configured such that the second valve 106 of small diameter in the first embodiment is eliminated and only the first valve 105 of large diameter is provided. Thus, the structural components of the second embodiment closely similar to those of the first embodiment are given the identical reference numerals and the description thereof is omitted as appropriate. FIG. 4 and FIG. 5 are each a cross-sectional view illustrating a structure and an operation of the control valve according to the second embodiment.

The control valve 200 is constituted as a motor-operated valve of stepping motor driven type and is configured by integrally assembling a valve body 201 and a motor unit 102. A lead-in port 110 and a lead-out port 112 are provided in a body 204, and the valve hole 120 is provided in an internal passage that joins the lead-in port 110 to the lead-out port 112. A spring support member 158 is provided in a lower end of a transmitting rod 252. In the second embodiment, the spring load of a spring 160 is set so that the spring load (e.g., 700 gram-weight) in the state as shown in FIG. 4 is larger than a sliding friction in an O-ring 149, namely the sliding force (e.g., 600 gram-weight).

When a large-diameter control is performed in such a configuration of the second embodiment as described above, the basically same control as the large-diameter control in the first embodiment is performed. That is, the state as shown in FIG. 4 transits to the state as shown in FIG. 5. As the rotor 172 is rotated and driven in one direction (in the normal direction), a valve element 130 is displaced in a valve opening direction while a valve actuating member 134 is in contact with a guide portion 148. At this time, it suffices that the drive force of a motor unit 102 is a force at least overcoming the biasing force (sliding friction) of the O-ring 149. That is, the transmitting rod 252 and the valve element 130 are displaceable in an integrated manner. Hence, the biasing force of the spring 160 does not act as the reaction force. Thus it suffices that the motor unit 102 generates a drive force enough to overcome the sliding force (e.g., 600 grams) of the O-ring 149.

Conversely, in order to restore the state from the open state as shown in FIG. 5 to the closed state as shown in FIG. 4, the rotor 172 in the state as shown in FIG. 5 is rotated and driven in the other direction (in the reverse direction). In that case, the biasing force of the spring 160 is larger than the sliding force of the O-ring 149. Thus, the valve element 130, which keeps the operation linkage to the valve actuating member 134, is driven integrally with the valve actuating member 134 in a valve closing direction. At this time, it suffices that the drive force of the motor unit 102 is a force at least overcoming the sliding force of the O-ring 149.

The description of the present invention given above is based upon illustrative embodiments. These embodiments are intended to be illustrative only and it will be obvious to those skilled in the art that various modifications could be further developed within the technical idea underlying the present invention and that such additional modifications are also within the scope of the present invention.

In the above-described embodiments, a description has been given of an example where the valve actuating member 134 and the transmitting rod 152 are configured separately so that they can be operation-linked to each other or their operation linkage can be released (cancelled). In a modification, the valve actuating member 134 and the transmitting rod 152 may be configured integrally with each other so that they are not displaceable relative to each other. That is, an operation transmitting member or the like configured such that an actuating member and a transmitting member are integrated into a single unit may be provided.

In the above-described embodiments, a description has been given of an example where the guide portion 184 of the shaft 182 and the engagement portion 190 of the rotational stopper 188 in the motor unit 102 are each formed in the shape of a spiral and formed of a coil-shaped material. In a modification, a screw mechanism may be provided where the guide portion 184 of the shaft 182 constitutes the external thread and the engagement portion 190 of the rotational stopper 188 constitutes the internal thread, for instance. A mechanism may be provided whereby the rotation is converted to the translation by both the guide portion 184 and the engagement portion 190.

In the above-described embodiments, a description has been given of an example where the above-described control valves are applied to an air conditioner of an electric-powered vehicle. This, however, should not be considered as limiting and it goes without saying that the control valve according to the preferred embodiments can be applied to an air conditioner of a vehicle provided with an internal-combustion engine and an air conditioner of a hybrid vehicle equipped with both an internal-combustion engine and an electric motor drive. In the above embodiments, an example is described where the control valve of each embodiment controls the flow of the refrigerant as a working fluid but the control valve may be configured as an electrically driven valve that controls the flow of a working fluid other than the refrigerant. In the above-described embodiments, a description has been given of an example where the stepping motor is used as the actuator but motors of other types, a solenoid or the like may be used as the actuator.

### Description of reference numerals

- 100: Control valve
- 101: Valve body
- 102: Motor unit
- 104: Body
- 105: First valve
- 106: Second valve
- 110: Lead-in port
- 112: First lead-out port
- 114: Second lead-out port
- 118: Guiding passage
- 120: Valve hole
- 122: Valve seat
- 130, 132: Valve element
- 134: Valve actuating member
- 144: Valve hole
- 146: Valve seat
- 148: Guide portion
- 149: O-ring
- 150: Back pressure chamber
- 152: Transmitting rod
- 160, 164: Spring
- 172: Rotor
- 173: Stator
- 182: Shaft
- 184: Guide portion
- 186: Stopper
- 188: Rotational stopper
- 190: Engagement portion
- 192: Power-transmitting portion
- 200: Control valve
- 201: Valve body
- 204: Body
- 252: Transmitting rod

## Claims

1. A control valve comprising:
a body having an internal passage through which a working fluid flows, the internal passage having a valve hole;
a guiding passage provided in the body, the guiding passage being coaxially formed with the valve hole;
a driven member configured such that a valve element for opening and closing a valve section by touching and leaving the valve hole and a guide portion slidably supported by the guiding passage are integrally formed with each other;
a pressure canceling structure configured to cancel out an effect of fluid pressure acting on the valve element;
a sealing member provided on a sliding surface of the guide portion;
an actuator mounted on the body;
an actuating member configured to drive the valve element in opening and closing directions of the valve section, the actuating member being driven by the actuator in a direction of axis line;
a transmitting member operatively linked to the actuating member in a manner such that the transmitting member and the actuating member are displaceable in an integrated manner, the transmitting member being inserted to the driven member; and
a biasing member configured to bias the driven member in a valve closing direction, the biasing member is being supported by the driven member and the transmitting member in such a manner that the biasing member is set between the driven member and the transmitting member.

2. A control valve according to claim 1, wherein the internal passage includes a first internal passage and a second internal passage, and
the body houses a first valve for controlling an opening degree to regulate a flow of refrigerant in the first internal passage and a second valve for controlling the opening degree to regulate the flow of refrigerant in the second internal passage,
wherein the body has a first valve hole provided in the first internal passage, as the valve hole, and
the body further has a second valve hole, provided in the second internal passage, which is coaxially formed with the first valve hole, and wherein the valve element includes a first valve element for opening and closing the first valve by touching and leaving the first valve hole, as the valve element, and
the control valve further comprising a second valve element, provided separately from the driven member, for opening and closing the second valve by touching and leaving the second valve hole, the second valve element being configured such that
the second valve element and the transmitting member are operatively linked to each other and displaceable in an integrated manner or
an operation linkage between the second valve element and the transmitting member is released such that the second valve element and the transmitting member are displaceable relative to each other, and
the control valve further comprising a second biasing member configured to bias the second valve element in a valve closing direction, the second biasing member being supported by the driven member and the second valve element in such a manner that the second biasing member is set between the driven member and the second valve element.

3. A control valve according to claim 2, wherein, when the opening degree of the first valve is controlled, the actuating member and the first valve element are operatively linked to each other and displaceable in an integrated manner and
an operation linkage between the transmitting member and the second valve element is released, and
wherein, when the opening degree of the second valve is controlled, the transmitting member and the second valve element are operatively linked to each other and displaceable in an integrated manner and
an operation linkage between the actuating member and the first valve element is released.

4. A control valve according to any one of claim 1 to claim 3, wherein a stepping motor including a rotor, which is rotated and driven, is used as the actuator,
the control valve further comprising a functioning conversion mechanism, which rotates together with the rotor, configured to convert a rotative motion thereof about the axis line into a translational motion of the actuating member in the direction of axis line.

5. A control valve according to claim 4, further comprising:
a shaft extending in a direction of axis line of the rotor, the shaft being fixed to the body:
a guide portion, formed in the shape of a spiral, extending across an outer circumferential surface of the shaft along the direction of axis line; and
a rotational stopper having an engagement portion, which joins with the guide portion, and a power-transmitting portion, which is supported by the rotor, the rotational stopper being configured to restrict a rotation of the rotor in a manner such that
the rotational stopper is displaced in the direction of axis of the shaft together with the rotation of the rotor and
the power-transmitting portion is stopped by one end side of the shaft and the other end thereof, respectively,
wherein the actuating member, which is in contact with the rotor, is translatably supported thereby in the direction of axis line,
wherein the rotor, which is of a hollow structure, has bearing parts at one end side and the other end side of the rotor, and
wherein the shaft extends into an internal space of the rotor, and the rotational stopper is so configured as to be displaceable in the internal space.
